# DEMANDE DE BREVET EUROPEEN

(11) **EP 2 804 032 A1**
(43) Date de publication de la demande: **19.11.2014**
(21) Numéro de dépôt: 14167311.1
(22) Date de dépôt: 07.05.2014
(51) Int. Cl.: G02B 5/28, G02B 26/00, G02B 26/02, G01B 9/02

(54) **Dispositif optique d'obturation rapide**

(30) Priorité: 14.05.2013 FR 1301100
(71) Demandeur: Compagnie Industrielle des Lasers Cilas, 45100 Orleans (FR)
(72) Inventeur: Grasser, Régis, 45160 OLIVET (FR); Moreau, Aurélien, 45160 OLIVET (FR)
(74) Mandataire: Gevers France

(57) **Abrégé**

- Le dispositif (1) comporte au moins une cavité de Fabry-Pérot (3) présentant un écartement (E) réglable, dont une valeur d'écartement dite nominale permet un passage à travers ladite cavité de Fabry-Pérot (3) pour un rayonnement laser (4) de fréquence correspondante, des moyens d'actionnement (5A) commandables, de type piézo-électrique, aptes à faire varier ledit écartement (E), dans un domaine de valeurs d'écartement comprenant ladite valeur nominale, et une unité de commande (6) pour commander lesdits moyens d'actionnement (5A) de sorte qu'ils fassent varier l'écartement (E) selon une fonction périodique au cours du temps.

## Description

La présente invention concerne un dispositif optique d'obturation rapide. Elle concerne également un système d'observation actif comprenant un tel dispositif optique d'obturation rapide, notamment pour des applications de défense et de sécurité.

Dans le cadre de la présente invention, un système d'observation actif est configuré pour illuminer une scène de l'environnement à l'aide d'une source laser, afin d'améliorer la qualité d'une image de ladite scène et/ou pour mettre en évidence certains détails spécifiques, tels que des optiques pointées par exemple. A cet effet, ledit système d'observation comprend une source laser avec une optique spécifique de génération de forme du faisceau et une caméra de réception apte à réaliser une image de la scène illuminée. Une caractéristique d'un système actif tel que considéré est sa capacité à illuminer uniquement une partie restreinte de l'espace. Pour ce faire, la caméra est sensible à la lumière entrante pour une durée de temps très courte, typiquement entre 0,1 µs et 10µs. Si l'illumination laser utilise également une courte impulsion, la combinaison avec le temps d'exposition court de la caméra résulte en une sélection de photons qui correspondent à une durée de déplacement plutôt restreinte. Dans ce cas, l'image générée correspond à une partie de l'espace (en distance) par rapport à la position du système actif (typiquement de quelques dizaines à quelques centaines de mètres). Le champ de vision peut ainsi être défini non seulement en plan (selon le plan de vision habituel), mais également selon la distance vers le système actif, c'est-à-dire en volume.

Dans une telle application, certains lasers requièrent de multiples expositions de très courte durée pour atteindre l'énergie nécessaire pour former une image avec un rapport signal/bruit acceptable.

La présente invention concerne un dispositif optique d'obturation rapide permettant de fournir une capacité de multiples expositions de courte durée à tout élément optique associé et notamment à des caméras.

Selon l'invention, ledit dispositif optique d'obturation rapide est remarquable en ce qu'il comporte :
- au moins une cavité de Fabry-Pérot présentant un écartement réglable, dont une valeur d'écartement dite nominale permet un passage à travers ladite cavité de Fabry-Pérot pour un rayonnement (ou impulsion) laser de fréquence correspondante dite fréquence nominale ;
- des moyens d'actionnement commandables, de type piézo-électrique, aptes à faire varier ledit écartement, dans un domaine de valeurs d'écartement comprenant ladite valeur nominale ; et
- une unité de commande pour commander lesdits moyens d'actionnement de sorte qu'ils fassent varier l'écartement selon une fonction périodique au cours du temps. De préférence, ladite fonction périodique est de type sinusoïdal.

Des changements rapides de la taille de l'écartement de la cavité (mis en oeuvre par les moyens d'actionnement) permettent la réalisation de la fonction d'obturation.

De plus, pour obtenir un temps de réponse très court d'environ 1 µs, le dispositif d'obturation rapide conforme à l'invention fonctionne à la résonance mécanique de la cavité, en commandant les actionneurs piézo-électriques avec une fonction périodique, notamment sinusoïdale. La fréquence de résonance peut être gérée par l'intermédiaire de la forme et du facteur de forme de différentes parties de la cavité de Fabry-Pérot. Il est par exemple possible d'obtenir une résonance à 5kHz.

La cavité devient alors transparente pour un rayonnement de longueur d'onde donnée, uniquement si la taille de l'écartement de la cavité de Fabry-Pérot passe à la valeur appropriée correspondante. Cette situation peut se produire plusieurs fois à chaque cycle de la fonction de commande périodique, de préférence sinusoïdale, mais elle dure un court temps uniquement.

Grâce à ces caractéristiques, le dispositif d'obturation conforme à l'invention peut s'ouvrir et se fermer à des fréquences élevées (1 khz à 50khz), chaque ouverture durant un temps très court (0,1 µs à 10µs). Ledit dispositif d'obturation n'a pas de puissance optique et réalise uniquement une fonction de transmission variant rapidement.

Ledit dispositif d'obturation rapide peut être placé devant les optiques d'un capteur optique et notamment d'une caméra, à proximité de la position de la pupille d'entrée, pour créer une capacité de générer de courtes expositions multiples, pour la lumière entrante.

Dans un premier mode de réalisation, lesdits moyens d'actionnement de type périodique sont configurés pour modifier uniformément l'espacement entre deux surfaces parallèles de la cavité de Fabry-Pérot, afin de faire varier ledit écartement.

Dans un second mode de réalisation, lesdits moyens d'actionnement de type périodique sont configurés pour déformer ladite cavité de Fabry-Pérot, afin de faire varier ledit écartement.

Par ailleurs, de façon avantageuse, ledit dispositif optique d'obturation rapide comporte :
- des moyens permettant à un opérateur de régler la fréquence de résonance de ladite cavité de Fabry-Pérot ; et/ou
- des moyens permettant à un opérateur de régler la durée d'ouverture pour la fréquence nominale et la durée de répétition de l'ouverture.

Dans un mode de réalisation particulier, ledit dispositif optique d'obturation comporte une pluralité de cavités de Fabry-Pérot qui sont réparties sur une même surface optique, représentant de préférence une pupille d'entrée d'un élément optique et notamment d'une caméra.

Dans ce cas, avantageusement, lesdites cavités de Fabry-Pérot sont configurées pour être commandées indépendamment. De plus, de façon avantageuse, ledit dispositif optique d'obturation comporte une pluralité de polariseurs, dont chacun est associé à l'une desdites cavités de Fabry-Pérot.

La présente invention concerne également un système d'observation actif, du type comportant :
- au moins une source laser, qui est apte à émettre au moins un rayonnement (ou impulsion) laser ;
- un obturateur commandable susceptible d'être amené, de façon alternative, dans une position ouverte, dans laquelle il laisse passer ledit rayonnement laser, et une position fermée dans laquelle il empêche le passage dudit rayonnement laser ;
- une caméra susceptible de prendre l'image d'un champ de vision illuminé par ladite source laser, au travers dudit obturateur ; et
- une unité de commande qui commande simultanément ladite source laser, ledit obturateur et ladite caméra.

Selon l'invention, ce système d'observation actif est remarquable en ce que ledit obturateur comprend un dispositif optique d'obturation rapide, tel que celui précité, qui est alors placé devant les optiques de la caméra, à proximité de la position de la pupille d'entrée, pour créer une capacité de générer de courtes expositions multiples pour la lumière entrante.

Dans un mode de réalisation particulier, la pupille d'entrée de la caméra comprend une pluralité de sous-pupilles dont chacune comporte une cavité de Fabry-Pérot.

Ce dernier mode de réalisation est particulièrement bien approprié à une analyse polarimétrique. En effet, chaque sous-pupille peut être couplée à polariseur afin de sélectionner uniquement un état de polarisation venant de la scène. L'analyse d'images ainsi polarisées permet notamment une détection d'objets cachés dans la scène.

La présente invention concerne en outre un procédé d'obturation rapide, qui est remarquable en ce que :
- on prévoit une cavité de Fabry-Pérot présentant un écartement réglable, dont une valeur d'écartement dite nominale permet un passage à travers ladite cavité de Fabry-Pérot pour un rayonnement laser de fréquence correspondante dite fréquence nominale ; et
- on fait varier rapidement ledit écartement, par déformation ou écartement d'au moins une surface de la cavité de Fabry-Pérot, dans un domaine de valeurs d'écartement comprenant ladite valeur nominale, selon une fonction périodique au cours du temps.
   Les figures du dessin annexé feront bien comprendre comment l'invention peut être réalisée. Sur ces figures, des références identiques désignent des éléments semblables.
   La figure 1 illustre très schématiquement un dispositif d'obturation rapide conforme à l'invention.
   La figure 2 illustre des durées d'ouverture du dispositif d'obturation, associées à une durée d'exposition d'une caméra.
   La figure 3 montre une caméra qui est associée à un dispositif d'obturation rapide conforme à l'invention.
   Les figures 4A et 4B sont des graphiques permettant d'expliquer un premier mode de réglage d'un dispositif d'obturation rapide conforme à l'invention.
   Les figures 5A et 5B sont des graphiques permettant d'expliquer un second mode de réglage d'un dispositif d'obturation rapide conforme à l'invention.
   Les figures 6A, 6B et 6C montrent différents modes de réalisation d'un dispositif d'obturation rapide conforme à l'invention.
   Les figures 7A et 7B illustrent très schématiquement un mode de réalisation particulier d'un dispositif d'obturation rapide conforme à l'invention.

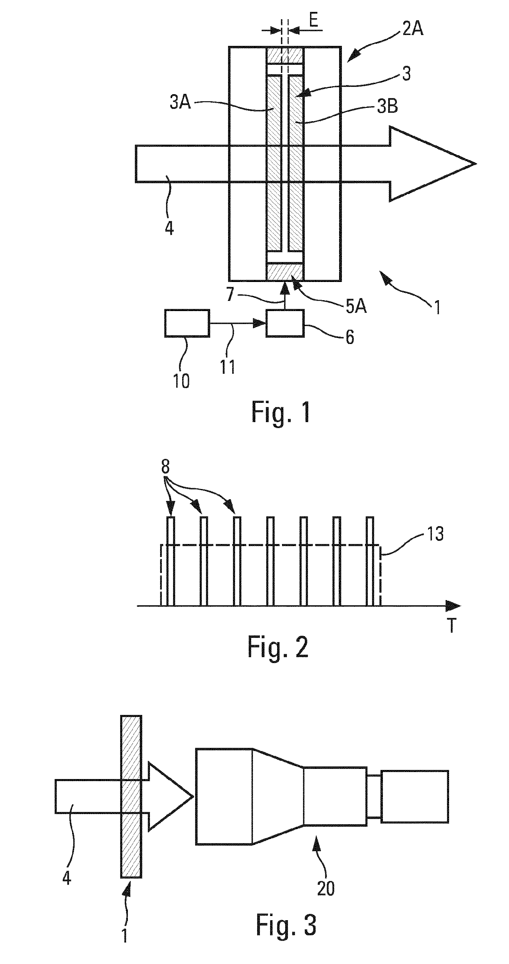

Le dispositif optique d'obturation rapide 1 conforme à l'invention et représenté schématiquement sur la figure 1 est destiné à fournir une capacité de multiples expositions de courtes durées à tout élément optique associé, et notamment à une caméra 20 (figure 3), placé entre ce dispositif 1 et un endroit d'émission d'un faisceau laser (notamment une scène renvoyant un faisceau généré par une source laser).

Selon l'invention, ce dispositif optique d'obturation rapide 1 comporte au moins un ensemble 2A, 2B comprenant :
- une cavité de Fabry-Pérot 3 de type usuel. Cette cavité 3 comprend, de façon usuelle, deux surfaces planes 3A et 3B partiellement réfléchissantes, à coefficients de réflexions élevés. Ladite cavité 3 présente un écartement E réglable (correspondant à l'écartement entre les deux surfaces 3A et 3B), dont une valeur d'écartement E0 dite nominale permet un passage à travers ladite cavité de Fabry-Pérot pour une impulsion laser 4 de fréquence correspondante dite fréquence nominale, comme précisé ci-dessous ; et
- des actionneurs piézo-électriques 5A, 5B qui sont susceptibles d'être commandés et qui sont aptes à faire varier rapidement ledit écartement E, dans un domaine D1, D2 de valeurs d'écartement E comprenant ladite valeur nominale E0.

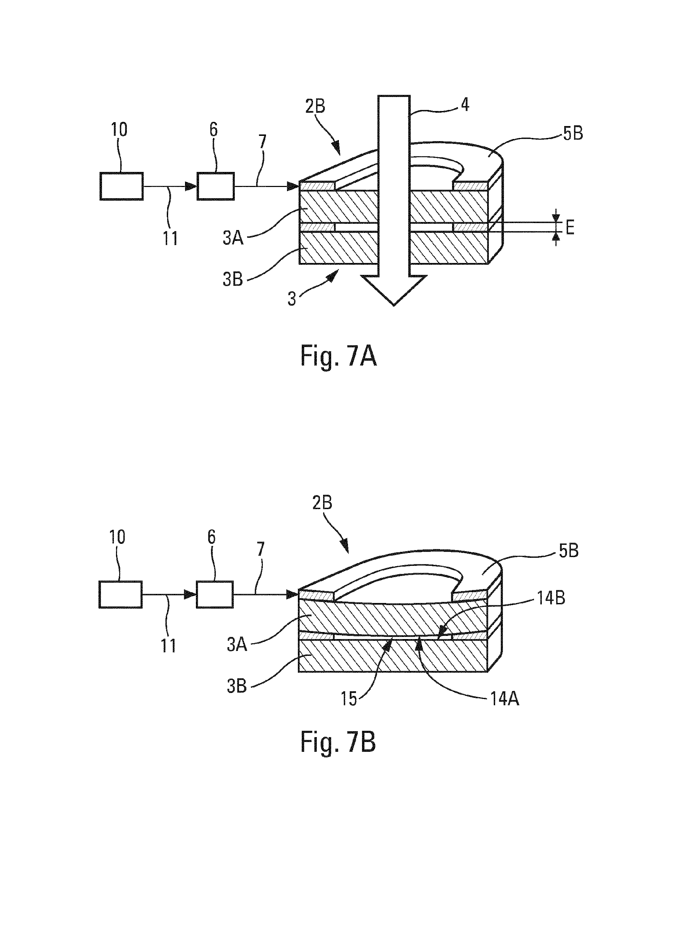

Dans le mode de réalisation de la figure 1, lesdits actionneurs piézo-électriques 5A de l'ensemble 2A sont configurés pour faire varier, parallèlement et uniformément, l'espacement (définissant l'écartement E) entre les deux surfaces 3A, 3B de la cavité de Fabry-Pérot 3 qui sont parallèles. Dans ce mode de réalisation de la figure 1, l'espacement reste toujours uniforme entre les deux surfaces 3A et 3B de la cavité 3. Toutefois, un autre mode de réalisation (générant une déformation de la cavité Fabry-Pérot 3) est également possible, comme précisé ci-dessous en référence aux figures 7A et 7B.

Ledit dispositif 1 comporte de plus, selon l'invention, une unité de commande 6 qui est reliée par l'intermédiaire d'une liaison 7 auxdits actionneurs piézo-électriques 5A, 5B et qui est formée de manière à commander lesdits actionneurs 5A, 5B de sorte qu'ils fassent varier l'écartement E selon une fonction F1, F2 qui est périodique au cours du temps. De préférence, cette fonction périodique F1, F2 est de type sinusoïdal.

On sait qu'une cavité de Fabry-Pérot 3 présente une transmission de lumière qui est très sensible à la longueur d'onde. Selon la valeur de l'écartement E, la transmission pour une longueur d'onde donnée peut varier d'une transmission nulle à une transmission complète. En modifiant la taille de l'écartement E de la cavité de Fabry-Pérot 3, on peut donc facilement contrôler la transmission pour une longueur d'onde spécifique. Des changements rapides de taille de l'écartement E permettent ainsi la mise en oeuvre d'une fonction d'obturation.

Cependant, l'inertie mécanique de l'ensemble 2A, 2B autorise uniquement un temps de réponse d'environ 1ms. Pour obtenir un temps de réponse beaucoup plus court de l'ordre de 1µs, le dispositif 1 fonctionne à la résonance, en commandant les actionneurs piézo-électriques 5A, 5B avec une fonction périodique, de préférence sinusoïdale. La fréquence de résonance peut être gérée par l'intermédiaire de la forme et du facteur de forme de différentes parties de la cavité de Fabry-Pérot 3.

Grâce à ces caractéristiques, le dispositif d'obturation 1 conforme à l'invention est apte à s'ouvrir et se fermer à fréquences élevées (1 khz à 50khz). Chaque ouverture 8 (figure 2) durant un temps très court (0,1 µs à 10µs). Ledit dispositif optique d'obturation rapide 1 n'a pas de puissance optique et réalise uniquement une fonction de transmission changeant rapidement.

La cavité de Fabry-Pérot 3 est donc configurée pour devenir transparente à la longueur d'onde considérée de l'impulsion laser 4, uniquement si la taille de l'écartement E passe à la valeur nominale E0 représentative de cette longueur d'onde. Cette situation peut se présenter plusieurs fois à chaque cycle de la fonction sinusoïdale F1 et F2, mais elle dure un court temps uniquement. Le fait de fonctionner à la résonance permet alors un temps d'ouverture de 1µs ou moins pour le dispositif 1.

En outre, ledit dispositif optique d'obturation rapide 1 comporte également des moyens de réglage 10 qui sont, par exemple, reliés par une liaison 11 à l'unité de commande 6 et qui permettent à un opérateur de régler, notamment, la fréquence de résonance de ladite cavité de Fabry-Pérot 3, la fréquence nominale ainsi que la durée d'ouverture pour la fréquence nominale et la durée de répétition de l'ouverture.

Plus précisément :
- l'ajustement des paramètres de la résonance de la cavité permet un réglage de la durée d'ouverture (ou temps pendant lequel la cavité optique 3 permet le passage du rayonnement laser monochromatique (ou impulsion laser) 4) ; et
- la forme et le facteur de forme des différentes parties du dispositif 1 permettent un réglage de la fréquence.

Le dispositif 1 peut ainsi générer une fonction d'expositions multiples de courtes durées.

Si la cavité 3 est ajustée pour avoir une transmission totale de l'impulsion laser 4 au repos (valeur médiane) de la fonction de commande F1, l'excitation de la résonance interdit le passage de cette impulsion laser 4 pour l'essentiel du temps T, mais la laisse passer au repos (écartement nominal de 20 µm).

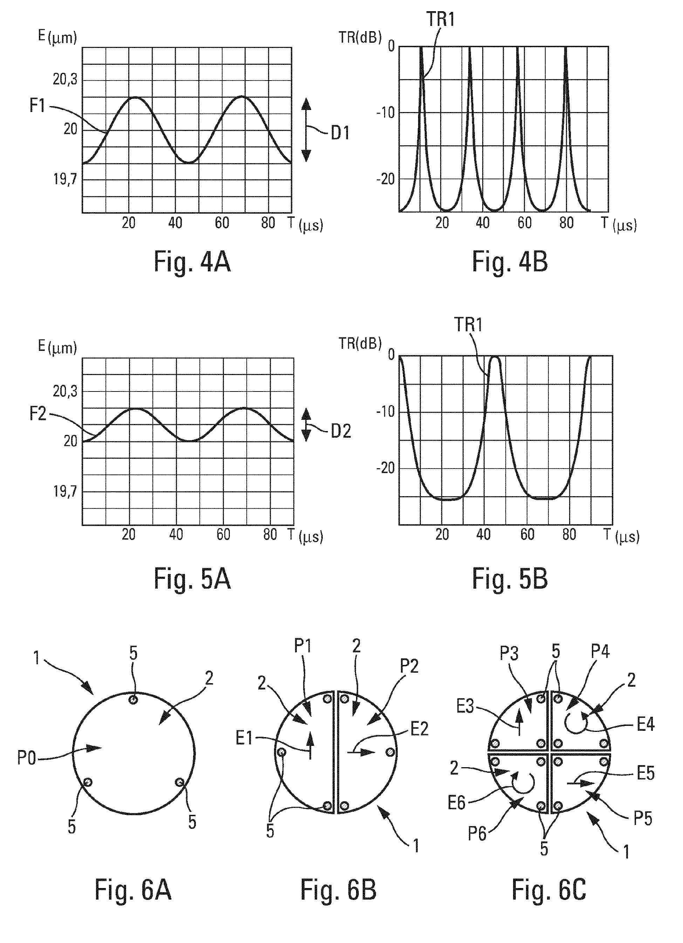

Cette situation est représentée sur les figures 4A et 4B, qui représentent respectivement :
- la variation de l'écartement E de la cavité 3 (exprimée en µm) en fonction du temps T (exprimé en µs), qui vérifie une fonction F1 de type sinusoïdale ; et
- la transmission correspondante TR1 (exprimée en dB) de l'impulsion laser 4, à travers l'ensemble 2, en fonction dudit temps T.

Dans cet exemple, pour laquelle la cavité 3 est réglée pour laisser passer l'impulsion laser 4 au repos de la fonction F1 (environ aux temps T : 12 µs, 34 µs), l'ouverture est réalisée environ toutes les 20 µs (durée de répétition de l'ouverture) et elle dure moins de 1 µs (durée d'ouverture).

Si la cavité est ajustée pour avoir une transmission nulle au repos, l'excitation de la résonance permet au rayonnement laser de traverser la cavité 3 uniquement lorsqu'elle atteint la valeur d'écartement adéquate (20 µm).

Cette situation est représentée sur les figures 5A et 5B, qui représentent respectivement :
- la variation de l'écartement E de la cavité 3 (exprimée en µm) en fonction du temps T (exprimé en µs), qui vérifie une fonction F2 de type sinusoïdale ; et
- la transmission correspondante TR2 (exprimée de dB) de l'impulsion laser 4 à travers l'ensemble 2 en fonction dudit temps T.

Dans cet exemple, pour laquelle la cavité 3 est réglée pour laisser passer l'impulsion laser 4 lorsque la fonction F2 atteint la valeur minimale

(environ au temps T : 0 µs, 45 µs), la vitesse de l'ouverture est plus lente, mais elle dure plus longtemps, près de 5 µs.

La présente invention prévoit d'utiliser une cavité de Fabry-Pérot de forte finesse (très sélective en longueur d'onde) pour transformer une oscillation mécanique de longue période (typiquement la milliseconde ou la dixième de milliseconde) en un temps d'obturation beaucoup plus rapide (typiquement la microseconde).

Par ailleurs, dans un mode de réalisation particulier représenté sur les figures 7A et 7B, lesdits actionneurs piézo-électriques 5B de l'ensemble 2B sont configurés pour générer une déformation de la cavité de Fabry-Pérot 3.

Sur la figure 7A, la cavité 3 présente l'écartement E approprié permettant de laisser passer le faisceau laser 4 (avec un agencement parallèle des deux surfaces 3A et 3B).

En revanche, dans la situation de la figure 7B, les actionneurs piézo-électriques 5B ont été actionnés de manière à déformer la cavité 3 (en agissant sur la surface 3A). Cette déformation (illustrée par une flèche 15) entraîne que la face interne 14A de la surface 3A (opposée à la face interne 14B de la surface 3B) est légèrement bombée et convexe, ce qui modifie l'écartement entre les deux surfaces 3A et 3B qui n'est plus constant. Ainsi, l'espacement entre les deux surfaces 3A et 3B est différent de l'écartement nominal, au moins au niveau du passage (flèche 15) de l'impulsion laser 4. Ladite impulsion laser 4 est alors réfléchie et ne peut pas traverser la cavité de Fabry-Pérot 3.

Dans un mode de réalisation simplifié, le dispositif 1 comporte un seul ensemble 2 qui est agencé au niveau d'une pupille d'entrée P0, comme représenté schématiquement sur la figure 6A.

Comme indiqué ci-dessus en étant placé devant les optiques de la caméra 20, à proximité de la position de la pupille d'entrée, le dispositif d'obturation rapide 1, est apte à créer une capacité de générer de courtes expositions multiples pour le faisceau laser 4.

Dans un mode de réalisation particulier, ledit dispositif optique d'obturation 1 comporte une pluralité d'ensembles 2 (comprenant chacun une cavité de Fabry-Pérot 3) qui sont répartis sur une pupille d'entrée notamment d'une caméra 20. Dans ce cas, lesdites cavités de Fabry-Pérot 3 sont configurées pour être commandées indépendamment. De plus, ledit dispositif optique d'obturation 1 comporte une pluralité de polariseurs (non représentés), dont chacun est associé à l'une desdites cavités de Fabry-Pérot 3.

L'architecture du dispositif 1 est ainsi divisée en plusieurs sous-pupilles, par exemple :
- en deux sous-pupilles similaires P1 et P2, comme représenté sur la figure 6B avec des polarisations respectives E1 et E2 ; ou
- en quatre sous-pupilles similaires P3 à P6, comme représenté sur la figure 6C avec des polarisations respectives E3 à E6.

Les différents éléments 3 et 5 peuvent être pilotés indépendamment pour ouvrir l'une ou l'autre sous-pupille selon le besoin.

Ce mode de réalisation des figures 6B et 6C est particulièrement bien approprié à une analyse paramétrique. Avec deux ou quatre sous-pupilles, chaque sous-pupille peut donc être couplée à un polariseur afin de sélectionner uniquement un état de polarisation venant de la scène. L'analyse d'images ainsi polarisées permet une détection d'objets cachés dans la scène, notamment lorsque ces objets présentent une polarisation différente des éléments naturels (par exemple la végétation de la scène).

Dans une application préférée, ledit dispositif 1 fait ainsi partie d'un système d'observation actif (non représenté). Ce système d'observation actif comporte :
- au moins une source laser, qui est apte à émettre au moins une impulsion laser 4 ;
- ledit dispositif 1 qui est susceptible d'être amené, de façon alternative, dans une position ouverte, dans laquelle il laisse passer ladite impulsion laser 4, et une position fermée dans laquelle il empêche le passage de ladite impulsion laser 4 ;

- une caméra 20 susceptible de prendre l'image d'un champ de vision illuminé par ladite source laser, au travers dudit dispositif 1 ; et
- une unité de commande qui commande simultanément ladite source laser, ledit dispositif et ladite caméra.

Dans ce cas, le dispositif d'obturation rapide 1 est placé devant les optiques de la caméra 20, à proximité de la position de la pupille d'entrée, pour créer une capacité de générer de courtes expositions multiples, pour le faisceau laser 4, comme illustré sur la figure 3.

La caméra 20 est exposée de préférence pendant un temps d'exposition 13 qui est tel qu'il contient plusieurs ouvertures 8 du dispositif 1 et donc plusieurs expositions successives au faisceau laser 4 (émis par la source laser et réfléchie par la scène à observer), comme représenté schématiquement sur la figure 2, pour que la caméra 20 puisse recevoir l'énergie nécessaire pour former une image avec un rapport signal/bruit satisfaisant.

On notera que, grâce à l'invention, on peut utiliser sur le système actif :
- tout type de caméra ; et
- notamment une source laser de type à semi-conducteurs, qui est fiable, peut être facilement intégrée et présente un coût réduit.

## Revendications

1. Dispositif optique d'obturation rapide, ledit dispositif (1) comportant :
- au moins une cavité de Fabry-Pérot (3) présentant un écartement (E) réglable, dont une valeur d'écartement dite nominale permet un passage à travers ladite cavité de Fabry-Pérot pour un rayonnement laser (4) de fréquence correspondante dite fréquence nominale ;
- des moyens d'actionnement (5A, 5B) commandables, de type piézo-électrique, aptes à faire varier ledit écartement (E), dans un domaine de valeurs d'écartement comprenant ladite valeur d'écartement nominale ; et
- une unité de commande (6) pour commander lesdits moyens d'actionnement (5A, 5B) de sorte qu'ils fassent varier l'écartement (E) selon une fonction (F1, F2) périodique au cours du temps, ladite cavité de Fabry-Pérot (3) étant transparente pour le rayonnement laser (4) uniquement lorsque l'écartement (E) passe à ladite valeur d'écartement nominale.

2. Dispositif selon la revendication 1,
**caractérisé en ce que** lesdits moyens d'actionnement (5A) de type piézo-électrique, sont configurés pour modifier uniformément l'espacement entre deux surfaces parallèles (3A, 3B) de la cavité de Fabry-Pérot (3), afin de faire varier ledit écartement (E).

3. Dispositif selon la revendication 1,
**caractérisé en ce que** lesdits moyens d'actionnement (5B) de type piézo-électrique, sont configurés pour déformer ladite cavité de Fabry-Pérot (3), afin de faire varier ledit écartement (E).

4. Dispositif selon l'une des revendications 1 à 3,
**caractérisé en ce que** ladite fonction (F1, F2) périodique est de type sinusoïdal.

5. Dispositif selon l'une quelconque des revendications précédentes, **caractérisé en ce qu'**il comporte des moyens (10) permettant à un opérateur de régler la fréquence de résonance de ladite cavité de Fabry-Pérot (3).

6. Dispositif selon l'une quelconque des revendications précédentes, **caractérisé en ce qu'**il comporte des moyens (10) permettant à un opérateur de régler la durée d'ouverture pour la fréquence nominale et la durée de répétition de l'ouverture.

7. Dispositif selon l'une quelconque des revendications précédentes, **caractérisé en ce qu'**il comporte une pluralité de cavités de Fabry-Pérot (3) qui sont réparties sur une même surface optique.

8. Dispositif selon la revendication 7,
**caractérisé en ce que** lesdites cavités de Fabry-Pérot (3) sont configurées pour être commandées indépendamment.

9. Dispositif selon l'une des revendications 7 et 8,
**caractérisé en ce qu'**il comporte une pluralité de polariseurs, dont chacun est associé à l'une desdites cavités de Fabry-Pérot (3).

10. Système d'observation actif du type comportant :
- au moins une source laser, qui est apte à émettre au moins un rayonnement laser ;
- un obturateur commandable susceptible d'être amené, de façon alternative, dans une position ouverte, dans laquelle il laisse passer ledit rayonnement laser, et une position fermée dans laquelle il empêche le passage dudit rayonnement laser ;
- une caméra (20) susceptible de prendre l'image d'un champ de vision illuminé par ladite source laser, au travers dudit obturateur ; et
- une unité de commande qui commande simultanément ladite source laser, ledit obturateur et ladite caméra,
**caractérisé en ce que** ledit obturateur comprend un dispositif optique d'obturation rapide (1), tel que celui spécifié sous l'une quelconque des revendications 1 à 9.

11. Système selon la revendication 10, comprenant un dispositif optique d'obturation rapide (1) tel que celui spécifié sous la revendication 7, **caractérisé en ce que** ladite surface optique comportant une pluralité de cavités de Fabry-Pérot (3), représente la pupille d'entrée de la caméra (20).

12. Procédé d'obturation rapide,
**caractérisé en ce que** :
- on prévoit une cavité de Fabry-Pérot (3) présentant un écartement (E) réglable, dont une valeur d'écartement dite nominale permet un passage à travers ladite cavité de Fabry-Pérot (3) pour un rayonnement laser (4) de fréquence correspondante dite fréquence nominale ; et
- on fait varier ledit écartement (E), par déformation ou écartement d'au moins une surface (3A, 3B) de la cavité Fabry-Pérot (3), dans un domaine de valeurs d'écartement comprenant ladite valeur d'écartement nominale, selon une fonction (F1, F2) périodique au cours du temps, ladite cavité de Fabry-Pérot (3) étant transparente pour le rayonnement laser (4) uniquement lorsque l'écartement (E) passe à ladite valeur d'écartement nominale.
